(19) Europäisches Patentamt
European Patent Office
Office européen des brevets

(11) Numéro de publication : **0 309 360 B1**

# (12) FASCICULE DE BREVET EUROPEEN

(45) Date de publication du fascicule du brevet : **03.06.92 Bulletin 92/23**

(51) Int. Cl.$^5$ : **G01N 27/417**

(21) Numéro de dépôt : **88402402.7**

(22) Date de dépôt : **23.09.88**

## (54) Capteur électrochimique, à structure intégrée, de mesure de concentrations relatives d'espèces réactives.

(30) Priorité : **25.09.87 FR 8713290**

(43) Date de publication de la demande : **29.03.89 Bulletin 89/13**

(45) Mention de la délivrance du brevet : **03.06.92 Bulletin 92/23**

(84) Etats contractants désignés : **DE ES GB IT NL SE**

(56) Documents cités :
**EP-A- 0 052 542**
**FR-A- 2 449 887**
**FR-A- 2 577 047**
**US-A- 4 588 494**
**PATENT ABSTRACTS OF JAPAN, vol. 9, no. 177 (P-375)(1900), 23 juillet 1985; & JP A 60052762**
**PATENT ABSTRACTS OF JAPAN, vol. 10, no. 15 (P-422)(2072), 21 janvier 1986; & JP A 60171449**

(73) Titulaire : **THOMSON-CSF**
**51, Esplanade du Général de Gaulle**
**F-92800 Puteaux (FR)**

(72) Inventeur : **Pribat, Didier**
**Thomson-CSF SCPI**
**F-92045 PARIS LA DEFENSE CEDEX 67 (FR)**
Inventeur : **Perret, Joel**
**Thomson-CSF SCPI**
**F-92045 PARIS LA DEFENSE CEDEX 67 (FR)**
Inventeur : **Rouffy, Jean-Claude**
**Thomson-CSF SCPI**
**F-92045 PARIS LA DEFENSE CEDEX 67 (FR)**
Inventeur : **Velasco, Gonzalo**
**Thomson-CSF SCPI**
**F-92045 PARIS LA DEFENSE CEDEX 67 (FR)**

(74) Mandataire : **Grynwald, Albert et al**
**THOMSON-CSF SCPI**
**F-92045 PARIS LA DEFENSE CEDEX 67 (FR)**

EP 0 309 360 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention concerne un capteur électrochimique à structure intégrée, de mesure de concentrations d'espèces réactives et plus particulièrement un capteur réalisé en technologies de type couche mince ou couche épaisse sur substrat isolant électriquement et chimiquement inerte à haute température.

Elle est applicable notamment à un capteur de concentration en oxygène utilisable notamment dans l'industrie automobile.

Une des familles bien connues de capteurs électrochimiques fonctionne sur le principe de la pile à concentration et mesure la pression partielle, d'une ou plusieurs espèces du mélange gazeux à analyser. Ce mélange gazeux présent dans un premier compartiment, par exemple un mélange oxygène-gaz inerte, est séparé d'un milieu de référence par la paroi d'un électrolyte solide dont chaque face porte une électrode. Comme il est bien connu, les équations qui régissent le fonctionnement de ces capteurs sont : aux interfaces, électrodes/électrolyte

$$O_2 \rightleftharpoons 2O \underset{+4e}{\overset{-4e^-}{\rightleftharpoons}} 2O^{-2} \qquad (1)$$

la tension $V_{E1/E2}$ qui se développe alors entre les électrodes est donnée par la loi de NERNST :

$$V_{E1/E2}=\frac{RT}{4F}Ln\frac{P_1}{P_2} \qquad (2)$$

avec

R = constante des gaz parfaits = 8,314 J. $(mole.K)^{-1}$
F = nombre de Faraday = 96490 Coulombs
T = température absolue en Kelvin
$P_1$ et $P_2$ = pressions partielles des milieux 1 et 2 dans les compartiments 1 et 2.

Ainsi la connaissance de la température et de l'une des pressions partielles permet la détermination de l'autre pression partielle et cela sans ambiguïté.

Dans le cas où le mélange est réactif, par exemple un mélange $0_2$ + CO, et si l'électrode est un catalyseur de la réaction de ces gaz, il se produit la réaction :

$$2\,CO + O_2 \rightleftharpoons 2\,CO_2 \qquad (3)$$

et enfin si la combustion est complète jusqu'à réaliser l'équilibre thermodynamique réversible, la relation suivante est vérifiée :

$$\frac{[P\,CO]\,[P\,O_2]^{\frac{1}{2}}}{[P\,CO_2]} = K(T) \qquad (4)$$

avec K(T) un coefficient d'équilibre dépendant de la température, et P CO, P $O_2$, P $CO_2$ les pressions partielles d'oxyde de carbone, d'oxygène et de gaz carbonique.

Dans les applications concernant la régulation des moteurs automobiles à allumage commandé, afin de déterminer la pression partielle d'oxygène à l'échappement (milieu 1 par exemple) connaissant celle de référence (milieu 2 qui est en général l'air) en s'affranchissant de la mesure ou de la régulation de la température, on utilise le fait que si les gaz d'échappement sont amenés à l'équilibre thermodynamique (fin de combustion) la pression partielle d'oxygène, ainsi qu'en atteste la figure 1, voit sa valeur varier de quelques 15 ordres de grandeurs lorsque le mélange alimentant les cylindres passe par la stoechiométrie.

Ainsi, dans la formule de NERNST ci-dessus décrite, on observe un saut de tension lorsque le mélange passe la stoechiométrie $\Delta V = (RT/4F) \log (PO_2^{riche}/pO_2^{pauvre})$ ; si la température est de l'ordre de 800° C, le terme RT/4F est de l'ordre de 50 mV et le $\Delta V$ sera supérieur à 750 mV.

De tels capteurs dits stoechiométriques sont en général constitués d'un doigt de gant en zircone stabilisée ; la paroi externe munie d'une électrode de platine poreux (électrode de mesure) est en contact avec le gaz dont on veut analyser la teneur en oxygène et la paroi interne aussi munie d'une électrode de platine (électrode de référence) est en contact avec un gaz de référence, en général l'air. Le platine de l'électrode de mesure catalyse la fin de combustion des gaz d'échappement par exemple et, afin de ne pas saturer le platine, on l'encapsule à l'aide d'une couche de diffusion poreuse qui a pour principal effet de limiter le flux de gaz arrivant sur les sites catalytiques de l'électrode de platine.

La figure 2 représente quelques réponses type de ces capteurs en doigt de gant utilisant l'air comme référence.

Cependant, la réalisation de tels capteurs peut prendre des formes différentes. Les figures 3 et 4 représentent des exemples de formes de réalisation connues obtenues à partir de dépôts successifs (couches minces ou couches épaisses) de matériaux céramiques et métalliques sur un substrat isolant électriquement. Selon la figure 3, on sait réaliser un capteur électrochimique comportant sur un substrat Sb un électrolyte solide EL. Cet électrolyte peut être en zircone, thorine ou oxyde de cérium stabilisés par un ou plusieurs éléments des colonnes $II_A$ et $III_B$ de la classification périodique des éléments. Il peut être en couche mince ou épaisse ou sous forme massive.

Sur l'électrolyte EL et sur le substrat Sb sont déposées des électrodes E2/P2 et E1/P1. Les électrodes E1/P1 et E2/P2 sont situées dans un même plan. L'électrode E1/P1 combine les fonctions d'électrode et de milieu de référence. L'électrode E1/P1 est en outre protégée du milieu extérieur par un isolant étanche et inerte S1, qui la recouvre. On peut, par exemple, utiliser une association du type Ni/NiO ou Pd/PdO pour réaliser cette électrode-milieu de référence. L'électrode E2/P2 comporte deux zones et communique directement avec le milieu à analyser dans lequel circule le mélange gazeux G par un orifice pratiqué dans le corps isolant S1 qui la recouvre également. Dans la première zone Ct, l'électrode n'est pas en contact avec l'électrolyte EL. Le fluide à analyser doit traverser la zone Ct qui tient lieu de catalyseur et de chambre de prise d'essai. Dans cette zone les espèces réactives du mélange à analyser (par exemple, dans le cas des gaz d'échappement : CO et $O_2$) sont amenées à l'équilibre thermodynamique complet avant qu'elles n'atteignent la cellule électrochimique proprement dite :

E2/P2 - EL - E1/P1

P2 représente la pression partielle d'oxygène après catalyse dans le milieu réel à analyser. La catalyse, qui permet l'obtention de l'équilibre thermodynamique, s'effectue par la traversée du catalyseur par le fluide suivant une direction parallèle au plan des électrodes. Les électrodes sont prolongées vers l'extérieur par des liaisons métalliques sur lesquelles peuvent être soudés les contacts C1 et C2, liaisons qui sont réalisées en laque de platine par exemple. Dans un exemple de réalisation pratique les liaisons métalliques et les électrodes sont réalisées en une seule pièce. Le substrat Sb peut être constitué par un bon isolant à la température de fonctionnement du dispositif (du corindon par exemple) et assure la tenue mécanique de l'ensemble. La face du substrat 1 opposée à la cellule électrochimique porte une résistance de chauffage permettant d'accélérer la réaction.

Les dépôts peuvent être réalisés par les techniques bien connues, telles que : dépôt sous vide (pulvérisation cathodique, évaporation), dépôt en phase vapeur, dépôt électrochimique ou implantation ionique ou par une combinaison de deux ou plusieurs de ces techniques. Pour un mélange de référence métal/métal oxydé, tel que Pd/PdO, la réponse en tension à une température de l'ordre de 800° C est représenté sur la figure 2 pour la température correspondante (à 800° C la pression d'équilibre du mélange Pd/Po est égale à 0,2 Atm).

On trouvera les descriptions de capteurs ainsi réalisés dans les brevets français N° 2 441 164 et 2 444 272. D'autres formes de capteurs connus sont décrites dans les documents US-A-4 588 494 et FR-A-2 449 887.

La figure 5 représente un autre mode de réalisation d'un capteur selon l'art connu.

On retrouve sur cette figure les éléments qui ont été illustrés en relation avec la figure 3: la cellule de mesure E1/P1 - Eℓ1 - E2/P2 déposée en couches minces ou épaisses ou sous forme massive sur un substrat Sb, la région de catalyse Ct et la région de prise d'essais $P_{es}$ où s'effectuent les interactions avec le mélange gazeux à analyser. Ces deux dernières régions étant en fait dans l'exemple décrit constituées par un prolongement de l'électrode de mesure E2/P2. Le signal de sortie VS du capteur est transmis à des circuits extérieurs non représentés, par les connexions C1 et C2. Les deux électrodes E1/P1 et E2/P2 au moins doivent être protégées par une enveloppe isolante étanche et inerte S1, en émail par exemple.

Selon le capteur de la figure 5, une cellule électrochimique supplémentaire est intégrée dans le capteur et comprend un électrolyte solide Eℓ2 inséré entre deux électrodes E3 et E4. Dans l'exemple de réalisation de la figure 5 et selon la première approche, la seconde électrode E4 est confondue avec le prolongement de l'électrode de mesure E2/P2. La cellule affleure en surface de l'isolant S1 de façon à communiquer avec un milieu contenant de l'oxygène, ce milieu pouvant être le milieu Mex dans lequel circule le mélange gazeux à analyser G. La cellule E3 - Eℓ2 - E4 est alimentée par un courant de commande Ip par l'intermédiaire des connexions C3 et C4, C4 étant confondue avec C2. La face substrat opposée à la cellule électrochimique porte également une résistance de chauffage RC.

Si on se reporte à nouveau à la description qui précède, on voit immédiatement que la cellule E3 - Eℓ2 - E4 fonctionnant en pompe ionique modifie en fonction de l'amplitude et de la polarité du courant Ip, la composition en oxygène de la prise d'essai admise dans le capteur, c'est-à-dire la composition en oxygène du mélange gazeux circulant vers et au travers de la zone de catalyse Ct pour atteindre ultérieurement la cellule de mesure E2/P2 - Eℓ1 - E1/P1. Il s'ensuit que cette cellule produit un signal de sortie VS qui bascule, non plus lorsque la stoechiométrie du mélange G est atteinte mais bascule en "avance" ou en "retard" par rapport à cette stoechiométrie, le décalage de part et d'autre de la stoechiométrie étant déterminé en continu par l'amplitude et la polarité du courant de commande Ip. La figure 6 représente quelques réponses typiques de ce type de capteur en fonction du courant de polarisation Ip.

On trouvera une description d'un tel capteur dans les brevets français N° 2 494 445 et 2 442 444.

Dans l'état actuel de la technique, les capteurs, de dimensions rectangulaires de 8mm x 2mm, sont fabriqués collectivement sur des substrats de corindon carrés (3 pouces x 3 pouces) ou circulaires (∅ = 3 pouces) qui sont ensuite découpés à la scie diamantée ou au laser ($CO_2$ ou YAG). Chaque capteur est ensuite monté et câblé sur un support plan (barrette) d'alumine ou autre isolant électrique qui permet de véhiculer, par l'intermédiaire de pistes électriquement conductrices, les différents signaux électriques d'entrée et de sortie entre le milieu à analyser et les organes électroniques de commande de composition du mélange fluide ou de mesure du taux d'oxygène. Cette barrette supportant le capteur est elle-même ensuite montée dans un élément isolant cylindrique en céramique qui permet son adaptation à l'intérieur d'une pièce métallique semblable à un corps de bougie automobile. Les connexions entre le capteur et le milieu extérieur sont effectuées à l'aide de pistes conductrices électriques déposées sur la barrette support et reliées à l'autre extrémité de la barrette à un connecteur. A titre d'exemple, dans le contrôle du mélange air/essence alimentant les moteurs automobiles, le milieu analysé est constitué par les gaz circulant dans le pot d'échappement et l'information délivrée par le capteur implanté dans le flux gazeux d'échappement est traitée par un système électronique agissant ensuite sur les injecteurs d'essence ; le montage ci-dessus décrit permet donc de véhiculer les signaux électriques entre le capteur situé à l'intérieur du pot d'échappement et les différents fils et organes électriques desservant le système électronique central pilotant les injecteurs.

De façon plus détaillée, le montage des capteurs s'effectue à l'heure actuelle à l'aide d'une pâte de platine qui est recuite à 900° C. Le platine assure après cuisson, d'une part une liaison métallurgique entre la face arrière du capteur et la barrette d'alumine, liaison permettant le maintien mécanique du capteur et d'autre part une liaison électrique entre la résistance de chauffe du capteur sur la face arrière de ce dernier et les amenées de courant de chauffe supportées par la face arrière de la barrette d'alumine. Le câblage de la sortie signal, de la pompe (cas d'un capteur mélange pauvre tel que celui décrit sur la figure 5) et de la masse s'effectuent à l'aide de fils de platine, d'un diamètre ∅ = 50μm environ, qui sont soudés par thermocompression sur les sorties du capteur d'une part et sur les plots ménagés à cet effet sur la barrette d'alumine d'autre part. Ces deux opérations de montage et de câblage sont toutefois longues et délicates et de plus introduisent un certain nombre de problèmes spécifiques, à savoir :

– dilatation différentielle entre le support d'alumine chauffé par les gaz d'échappement et le substrat de corindon chauffé à une température généralement différente par la résistance incorporée sur sa face arrière. Ceci entraîne un cisaillement répété de la liaison métallurgique entre la face arrière du capteur et la barrette d'alumine pouvant conduire à la rupture de la liaison mécanique du capteur et de sa barrette.

– adsorption d'eau (toujours présente dans les gaz d'échappement) sur la surface des barrettes d'alumine pour une température inférieure à 650° C, ce qui a pour effet de rendre ces dernières barrettes superficiellement conductrices et donc de mettre en court-circuit les pistes métalliques déposées. Ce problème peut partiellement être résolu en passivant la surface des barrettes d'alumine et les métallisations à l'aide d'un émail réfractaire étanche, mais, l'adsorption d'eau s'effectuera tout de même à l'endroit où la passivation prend fin, c'est-à-dire à l'endroit où les fils de connexion thermocompressés venant du capteur sont raccordés sur les plots correspondants sérigraphiés sur les barrettes d'alumine.

– dépôts divers et électriquement conducteurs dus au cracking des additifs utilisés dans les huiles et les carburants et qui malgré la passivation ci-dessus décrite vont aussi avoir pour effet de mettre en court-circuit les connexions de platine à l'endroit où elles sont thermocompressées sur les plots correspondants sérigraphiés sur les barrettes d'alumine.

L'invention fournit un capteur permettant de résoudre ces problèmes.

L'invention concerne un capteur électrochimique, à structure intégrée, de mesure de concentration relatives d'espèces réactives contenues dans un mélange fluide et tel que caractérisé par la revendication 1.

Les différents objets et caractéristiques de l'invention apparaîtront plus clairement dans la description qui va suivre faite à titre d'exemple en se reportant aux figures annexées qui représentent :

– la figure 1, un diagramme des pressions partielles d'oxygène dans des gaz d'échappement automobiles ;

– la figure 2, des courbes de réponse en tensions de capteurs automobiles fonctionnant avec une référence air ou une référence métal/métal oxydé ;

– les figures 3 à 5, des exemples de réalisation de capteurs connus dans la technique et déjà décrits précédemment ;

– la figure 6, des courbes de réponse d'un capteur selon la figure 5 ;

– les figures 7 et 8, des vues en perspective d'un exemple de réalisation d'un capteur selon l'invention ;

– la figure 9, une vue en coupe du capteur des figures 7 et 8 ;

– la figure 10, une vue éclatée d'un exemple de capteur selon l'invention (type de capteur de la figure 5) ;

– la figure 11, une vue en perspective du capteur des figures 7 et 8 comportant des moyens de fixation et des moyens de connexion électrique ;

– la figure 12, un exemple de montage du capteur de la figure 10 ;

– la figure 13, une vue éclatée d'un exemple de réalisation du capteur selon l'invention ;

– la figure 14, une vue en coupe d'un exemple de réalisation du capteur selon l'invention ;

– les figures 15 et 16, un exemple de réalisation collective sur une même plaque de plusieurs cellules électrochimiques selon l'invention.

En se reportant aux figures 7 à 9 on va tout d'abord décrire un exemple de réalisation du capteur selon l'invention.

Ce capteur comporte une plaque de substrat Sb de forme allongée. A une extrémité du substrat, dans une zone de détection, est réalisée une cellule électrochimique de détection DE constituant la partie active du capteur. La figure 9 représente une vue en coupe AA′, de façon plus détaillée, de cette cellule DE. A titre d'exemple, elle a été représentée de façon analogue au capteur de la figure 3.

Elle comporte :

– l'électrolyte EL réalisé sur le substrat Sb ;

– les électrodes E1/P1 et E2/P2 recouvrant chacune une partie de l'électrolyte ;

– les prises de connexions électriques C1, C2 connectées aux électrodes E1/P1 et E2/P2 ;

– la couche d'encapsulation S1 appelée également couche d'étanchéïté, possédant une entrée G permettant l'entrée du mélange gazeux à analyser.

Sur la figure 7, on voit que les prises de connexions électriques C1 et C2 sont prolongées par des rubans de connexions ou conducteurs C10 et C20 vers l'extrémité du substrat opposée à l'extrémité supportant la cellule DE. Ces conducteurs C10 et C20 connectent les prises de connexions C1 et C2 à des plages de connexion P1 et P2 situées dans une zone de connexion. La couche d'encapsulation S1 recouvre la zone de détection et la zone intermédiaire située entre la zone de détection et la zone de connexion. Cette couche d'encapsulation S1 protège ainsi de façon étanche la cellule DE, les connexions C1, C2 et les conducteurs C10, C20. Une entrée des gaz G est ménagée dans cette couche d'encapsulation S1 pour permettre le passage des gaz vers la cellule DE et notamment vers l'électrolyte EL comme cela est représenté sur la figure 9.

La figure 8 représente une vue en perspective mettant en évidence la face du capteur opposée à celle possédant la cellule DE. Sur cette figure, on voit donc une résistance de chauffage RC réalisée sur le substrat Sb, en vis-à-vis de la cellule DE. Cette résistance est visible sur la figure 9. Les conducteurs C30 et C40 connectent les extrémités de la résistance RC à des plages de connexion P3 et P4 situées dans la zone de connexion du substrat Sb. La zone de détection du substrat contenant la résistance RC et la zone intermédiaire située entre cette zone de détection et la zone de connexion sont recouvertes par une couche d'encapsulation S2 identique à S1.

De cette façon, comme cela est représenté en figures 7 et 8 le capteur de l'invention, de forme allongée, possède à une extrémité une cellule DE située dans une zone de détection, des plages de connexion situées à l'autre extrémité du capteur et connectées électriquement à la cellule DE, l'ensemble étant recouvert d'une ou plusieurs couches d'encapsulation exceptée la fenêtre d'admission des gaz G et la zone contenant les plages de connexion qui devront être connectées électriquement à d'autres organes électroniques ou électromécaniques.

Le capteur selon la présente invention est donc fabriqué sur un substrat unique, bon isolant électrique à haute température et chimiquement inerte tel que par exemple alumine, corindon, oxyde de beryllium, nitrure d'aluminium, spinelle, etc. Les différents éléments actifs du capteur (zircone stabilisée, mélange métal/métal oxyde, électrodes) seront déposés sous forme de couches à une extrémité d'une barrette ($Al_2O_3$, BeO, $Mg\,Al_2O_4$, AlN ...). Ces couches subiront tous les cycles de cuisson appropriés après dépôt.

Il est important de noter que le premier dépôt d'électrolyte solide (par exemple, zircone stabilisée déposée par sérigraphie) peut s'effectuer sur un substrat en matériau cru (alumine coulée par exemple). Dans ce cas, on effectuera une cuisson et un cofrittage de l'electrolyte et du substrat, par exemple à 1450° pendant 1 à 8 heures et les dépôts suivants seront cuits normalement c'est-à-dire 1400° C pour les électrodes, le mélange Pd/PdO et la résistance de chauffe et, 900° C à 1200° C pour l'émail selon sa nature.

Dans une autre variante, on pourra cofritter le substrat avec l'électrolyde solide et les deux électrodes de mesure et de référence ainsi que le mélange Pd/PdO à 1400° C durant 1 à 8 heures. L'émail est ensuite cuit entre 900 et 1200° C selon sa composition.

L'acheminement des entrées et sorties électriques du capteur à partir des électrodes sera effectué par l'intermédiaire de pistes conductrices (généralement métalliques) déposées (éventuellement par sérigraphie) sur la même plaque de substrat et qui seront raccordées par simple recouvrement aux électrodes de la partie active du capteur. L'ensemble élément actif et conducteurs sera passivé par encapsulation au moyen d'un émail réfractaire (déposé par exemple par sérigraphie) dans lequel ne sera pratiqué que l'ouverture nécessaire à la prise d'essai gazeuse pour analyse. La résistance de chauffe sera déposée (par exemple par sérigraphie) sur la face arrière de la barrette considérée, de façon à ce que le maximum de température (>650° C) soit situé exactement en dessous de l'ouverture dans l'émail (correspondant à la prise d'essai), interdisant ainsi les différents phénomènes d'absorption et d'incorporation d'eau en regard de la fenêtre d'admission des gaz G.

La figure 10 représente une vue éclatée plus détaillée d'un capteur selon l'invention dans lequel la cellule électrochimique DE est d'un type similaire à celui de la figure 5. Comme on peut le voir, le substrat Sb porte, sur une face, la cellule électrochimique DE avec les électrolytes Eℓ1, Eℓ2, une microchambre catalytique Ct des électrodes E1/P1, E2/P2, E3 et E4 et des connexions C1, C2, C3 et 34. L'ensemble est recouvert par une couche d'émail S1 possédant une ouverture d'accès du gaz à analyser G1, et une ouverture G2 permettant de pomper ou d'évacuer de l'oxygène. L'autre face du substrat Sb porte une résistance RC en regard de la cellule électrochimique et des connexions C30, C40. Une couche d'émail S2 recouvre cette face.

Si l'on se reporte aux schémas de principe des figures 3 et 5, on constate que du fait de l'emploi d'une référence interne solide de type métal/métal oxyde, l'impédance électronique d'isolement entre l'électrode de mesure et l'électrode de référence doit être élevée. En effet, tout transfert électronique entre ces deux électrodes conduit à un transfert concomittant d'oxygène, de l'électrode ou la pression partielle est la plus élevée vers l'électrode où cette dernière est la plus faible.

Si l'on se place à une température de l'ordre de 800° C la pression d'oxygène au-dessus de la référence, pression par exemple imposée par le mélange Pd/PdO (0,2 Atm) est toujours supérieure à celle reignant dans le pot d'échappement (<0,1 Atm). Dans ces conditions, tout court-circuit électronique entre les électrodes de mesure et de référence peut conduire, au bout d'un temps dépendant de l'amplitude du court-circuit, à la réduction complète de l'oxyde PdO compris dans le mélange Pd/PdO. Le potentiel pris par l'électrode de référence devient alors aléatoire et cette dernière ne joue plus son rôle de référence, rendant ainsi l'ensemble du capteur inopérant.

Pour éviter cet inconvénient, il faut que le support isolant (principale cause de court-circuit entre électrodes de mesure et de référence) présente à haute température une résistivité très élevée, de façon à isoler les deux électrodes.

Ainsi pour garantir une durée de vie de l'ordre de 2000 heures, compte tenu des configurations géométriques des capteurs, la résistivité à 800° C du support isolant doit être de l'ordre de $10^8 \Omega$ cm et dans tous les cas supérieure à $10^7 \Omega$ cm.

Ainsi, la conception d'une telle structure du capteur n'est possible qu'en utilisant en particulier un matériau type $Al_2O_3$ très pur (99,3 % < % en masse $Al_2O_3$ < 99,9 %) et de taille de grains optimisée. A titre d'exemple, la résistivité à 800° C d'un substrat de saphir est de l'ordre de quelques $10^{12} \Omega$ cm.

En se reportant à la figure 11, on va maintenant décrire un exemple de réalisation plus complet du capteur selon l'invention. Sur cette figure, on retrouve le capteur des figures 7 à 9.

Dans la partie intermédiaire, appelée zone de fixation, située entre la zone de détection et la zone de connexion est située une pièce de fixation MF. Cette pièce de fixation est fixée de façon rigide et étanche aux couches d'encapsulation S1, S2 du capteur. La pièce MF peut posséder une partie rétrécie MFO, et éventuellement filetée, permettant le montage du capteur dans la paroi d'un carter.

Ainsi comme représenté en figure 12, la partie MFO de la pièce de fixation MF est montée dans un carter CA, la cellule DE réalisée à l'extrémité gauche du capteur est située à l'intérieur du carter CA dans lequel se trouve le mélange gazeux à analyser ou à réguler. Le connecteur CE est ainsi isolé du mélange gazeux par la pièce de fixation MF et le carter CA.

Comme cela est représenté sur les figures 11 et 12, un connecteur CE est embroché sur le substrat Sb dans la zone de connexion. Des éléments de connexion (B1, B2, B3, B4 par exemple) sont connectés aux plages de connexion (P1, P2, P3, P4) et permettent la connexion des circuits électriques du capteur à un câble TO vers des circuits extérieurs sortant du cadre de l'invention.

En se reportant aux figures 13 et 14 on va décrire un exemple de réalisation détaillée d'un capteur selon l'invention.

Sur la figure 13 on retrouve :

– la plaquette de substrat Sb portant notamment la cellule électrochimique DE, les plages de connexions P1, P2 ;

– la pièce de fixation MF comprenant des parties de fixation MF0 et MF1 ;

– le connecteur CE, avec les broches de connexion B1, B2, B3, B4 et le câble TO.

Le capteur comporte en supplément une pièce de montage métallique R du capteur dans un carter (non représenté). Cette pièce de montage permet de monter le capteur dans un carter au lieu d'effectuer directement le montage de la pièce MF comme cela est représenté en figure 12.

La pièce de montage R est creuse de façon à recevoir la plaquette Sb et la cellule DE. Elle comporte :

– une partie RO venant s'emboîter sur la partie MFO de la pièce de fixation MF ;

– des ailettes de refroidissement R1 ;

– une partie filetée R2 permettant le montage de la pièce R dans une partie filetée du carter ;

– un capot de protection R3 protégeant la cellule électrochimique DE située à l'intérieur et possédant des ouvertures R4, R5 pour la circulation du gaz à analyser.

Par ailleurs, un boîtier T1 est emboîté, par une extrémité T10 sur la partie MF1 de la pièce de fixation MF. Le connecteur CE est monté et fixé à l'autre extrémité T11 et à l'intérieur du boîtier T1 de telle façon que les broches B1, B2, B3, B4 soient connectées aux plages de connexion telles que P1, P2, P3, P4 du capteur.

L'ensemble ainsi décrit est monté comme cela est représenté en coupe par la figure 14. De plus, le montage est rendu étanche de façon à ce que les gaz d'échappement n'atteignent pas la zone de connexion du capteur. Pour cela, la plaquette du capteur est scellée dans la pièce de fixation MF à l'aide d'un ciment réfractaire MF4. Des joints d'étanchéïté MF2, MF3 assurent l'étanchéïté entre la pièce de fixation MF et la pièce de montage R d'une part, et, la pièce de montage R et le boîtier T1 d'autre part.

Le boîtier T1 est serti dans sa partie T10 par une bague T12 et dans sa partie T11 respectivement sur la pièce de montage R et le connecteur CE.

Les figures 15 et 16 représentent un mode de réalisation collectif des barrettes portant les cellules électrochimiques.

Sur une même plaquette de substrat sont réalisées, côte à côte, plusieurs cellules électrochimiques avec les connexions C10, C20, C50 et les plages de connexion P1, P2, P5. Comme représenté en figure 15, on obtient ainsi plusieurs cellules, telle que DE1, régulièrement espacées. Il est à noter que les capteurs représentés sur la figure 15 sont du type décrit en relation avec les figures 5 et 10, ce qui explique l'existence d'une plage de connexion P5 et du conducteur de connexion C50 reliant cette plage à la cellule DE.

La figure 16 représente la face opposée de la plaquette portant les cellules électrochimiques. Sur cette face on trouve des résistances, telle que RC1, situées dans des zones correspondant chacune à une cellule électrochimique, ainsi que les connexions C30, C40 et les plages de connexion P3, P4.

La plaquette est découpée selon des lignes représentées par les traits mixtes aa′, bb′, cc′ de façon à obtenir un capteur portant, sur une face, une cellule électrochimique et les connexions correspondantes et, sur l'autre face, une résistance RC et les connexions correspondantes.

Tous les capteurs obtenus sont identiques.

A titre d'exemple, les matériaux utilisés pour la réalisation d'un tel capteur pourront être :

– pour l'électrolyte : un matériau zircone yttriée ;

– pour les électrodes : un matériau cermet (alliage céramique/métal) ;

– les éléments de connexions et conducteurs : des couches métalliques ;

– les couches d'encapsulation et le matériau assurant une étanchéité entre la pièce de fixation MF et la plaquette du capteur : un émail réfractaire de scellement.

Comme cela a été décrit précédemment, le procédé de réalisation de la plaquette du capteur pourra prévoir de déposer l'électrolyte EL de la cellule sur la plaquette de substrat Sb cru puis d'effectuer un cofrittage de l'ensemble. Les électrodes sont alors déposées ensuite puis recuites. Enfin, les circuits électriques (conducteurs électriques et plages de connexion) et la couche d'émail sont réalisés et l'ensemble est de nouveau cocuit entre 900° C et 1200° C selon la nature des matériaux.

Le procédé de l'invention prévoit également que l'électrolyte et les électrodes sont réalisés sur la plaquette de substrat cru. L'ensemble est ensuite cofritté. Les circuits électriques sont réalisés puis la couche d'émail est déposée puis recuite et l'ensemble est cocuit.

Dans le cas d'une réalisation collective de plusieurs capteurs sur une même plaquette, le procédé de l'invention prévoit, après recuit de l'émail, de découper la plaquette pour obtenir les différents capteurs individuels sous forme de barrettes.

La pièce de fixation et de support MF doit être en matériau accordé en dilatation au matériau du substrat Sb. Par exemple, si le substrat est alumine, la pièce MF sera de préférence en alumine également. De même, le ciment de scellement MF4 sera en matériau accordé en dilatation aux matériaux de la pièce MF et du substrat Sb.

Il est bien évident que la description qui précède n'a été faite qu'à titre d'exemple non limitatif et que d'autres variantes peuvent être envisagées sans sortir du cadre de l'invention. Les exemples numériques et les choix des matériaux notamment n'ont été fournis que pour illustrer la description.

## Revendications

1. Capteur électrochimique, à structure intégrée, de mesure de concentrations relatives d'espèces réactives contenues dans un mélange fluide, caractérisé en ce qu'il comprend :

– un substrat (Sb) en matériau bon isolant électrique à haute température et chimique inerte, de forme allongée comportant, disposée dans le sens de sa longueur, une première zone de détection, une deuxième zone support et de fixation du capteur, une troisième zone de connexion électrique ;

– une ou plusieurs cellules électrochimiques (DE) dont une au moins est sensible à un excès de l'une des espèces réactives par rapport à une stoechiométrie déterminée, cette cellule étant implantée directement dans la première zone du substrat (Sb) :

– des plages de connexions électriques (P1, P2, P3, P4, P5) situées dans la troisième zone de connexion électrique ;

– des pistes conductrices de connexions électriques (C10, C20, C50, C30, C40) déposées sur le substrat et connectant la ou les cellules électrochimiques (DE) aux plages de connexions électriques (P1, P2, P3, P4, P5) situées dans la troisième zone de connexion électrique ;

– une couche d'encapsulation (S1, S2) d'un matériau étanche audit mélange de gaz recouvrant au moins les première et deuxième zones, encapsulant notamment les cellules électrochimiques et les pistes de connexion et possédant au moins une ouverture d'accès des gaz (G) vers les cellules électrochimiques ;

– une pièce de fixation (MF) située dans la deuxième zone de fixation et interdisant le passage du fluide de la première zone vers la troisième zone.

2. Capteur selon la revendication 1, caractérisé en ce que le substrat (Sb) est en alumine possédant un taux compris entre 99, 2 et 99, 9 d'$Al_2O_3$.

3. Capteur selon la revendication 1, caractérisé en ce que la cellule électrochimique (DE) comporte une couche d'électrolyte solide (EL) réalisée sur le substrat (Sb) et en contact avec des électrodes (E1/P1 et E2/P2) conductrices de l'électricité, l'une des électrodes (E2/P2 ) située en contact avec l'ouverture d'accès des gaz et permettant la diffusion de l'espèce réactive.

4. Capteur selon la revendication 1, caractérisé en ce que la pièce de fixation (MF) est fixée de manière étanche au capteur.

5. Capteur selon la revendication 1, caractérisé en ce que la pièce de fixation (MF) possède des moyens de montage (MFO) permettant la fixation du capteur dans une paroi d'un carter (CA) de telle façon que la cellule électrochimique (DE) soit située à l'intérieur du carter (CA) contenant le mélange gazeux à analyser et que la paroi du carter associée à la pièce de fixation (MF) interdise le passage du mélange gazeux vers la zone de connexion

6. Capteur selon la revendication 1, caractérisé en ce qu'il comporte un connecteur femelle (CE) monté sur la troisième zone de connexion électrique et possédant des broches de connexion (B1, B2, B3, B4, B5) mises en contact avec lesdites plages de connexion (P1, P2, ...).

7. Capteur selon la revendication 1, caractérisé en ce que le substrat (Sb) et la pièce de fixation (MF) sont en matériaux accordés en dilatation

8. Capteur selon la revendication 7, caractérisé en ce que le substrat (Sb) et la pièce de fixation (MF) sont en alumine

9. Capteur selon la revendication 1, caractérisé en ce que la barrette portant la cellule électrochimique (DE) est scellée dans la pièce de fixation (MF) à l'aide d'un ciment dont le matériau est accordé en dilatation au matériau du substrat (Sb) et au matériau de la pièce de fixation (MF).

10. Capteur selon la revendication 1, caractérisé en ce qu'il comporte une pièce de montage (R) dans laquelle est montée la pièce de fixation (MF) avec la cellule électrochimique (DE) logée dans la pièce de montage, celle-ci possédant en outre une partie filetée permettant une fixation dans un carter (CA) et des ailettes de refroidissement

11. Procédé de réalisation d'un capteur comprenant une cellule électrochimique de détection (DE) comportant un électrolyte (EL) réalisé sur un substrat (Sb) et des électrodes (E1,P1 et E2/P2) recouvrant chacune une partie de l'électrolyte, une couche d'encapsulation (S1) recouvrant les électrodes et l'électrolyte à l'exception d'une ouverture d'entrée de gaz (G) permettant le passage des gaz vers l'électrolyte (EL), caractérisé en ce qu'il comporte les étapes suivantes :

– dépôt de l'électrolyte (EL) de la cellule sur la plaquette de substrat à une extrémité de la plaquette ;

– coffrittage de l'ensemble ;

- dépôt des électrodes (E1/P1 et E2/P2) ;
- recuit de l'ensemble ;
- réalisation de plages de connexion à une autre extrémité de la plaquette de substrat et de conducteurs électriques reliant ces plages de connexion aux électrodes ;
- dépôt d'une couche d'émail recouvrant la cellule électrochimique de détection (DE) et les conducteurs, et prévoyant l'ouverture d'entrée de gaz (G) ;
- recuit de l'ensemble

12. Procédé de réalisation d'un capteur comprenant une cellule électrochimique de détection (DE) comportant un électrolyte (EL) réalisé sur un substrat (Sb) et des électrodes (E1,P1 et E2/P2) recouvrant chacune une partie de l'électrolyte, une couche d'encapsulation (S1) recouvrant les électrodes et l'électrolyte à l'exception d'une ouverture d'entrée de gaz (G) permettant le passage des gaz vers l'électrolyte (EL), caractérisé en ce qu'il comporte les étapes suivantes :

- dépôt de l'électrolyte (EL) de la cellule sur la plaquette de substrat à une extrémité de la plaquette ;
- dépôt des électrodes (E1/P1 et E2/P2) ;
- coffrittage de l'ensemble ;
- réalisation de plages de connexion à une autre extrémité de la plaquette de substrat et de conducteurs électriques reliant ces plages de connexion aux électrodes ;
- dépôt d'une couche d'émail recouvrant la cellule électrochimique de détection (DE) et les conducteurs, et prévoyant l'ouverture d'entrée de gaz (G) ;
- recuit de l'ensemble

13. Procédé de fabrication d'un capteur selon l'une quelconque des revendications 11 ou 12, caractérisé en ce que plusieurs capteurs sont réalisés collectivement sur une même plaque de substrat puis sont découpés pour obtenir des capteurs individuels

14. Procédé selon l'une des revendications 11 ou 12, caractérisé en ce que le substrat est en matériau bon isolant électrique à haute température et chimiquement inerte.

15. Procédé selon la revendication 14, caractérisé en ce que le substrat est en alumine possédant un taux d'$Al_2O_3$ compris entre 99, 2 et 99, 9 %.

16. Capteur électrochimique selon la revendication 1, caractérisé en ce que ladite cellule électrochimique (DE) est implantée tout entière sur une même face du substrat (Sb) avec des pistes conductrices de connexion électrique (C10, C20) et des plages de connexion (P1, P2).

17. Capteur électrochimique selon la revendication 16, caractérisé en ce que ladite cellule électrochimique (DE) sensible à un excès de l'une des espèces réactives est implantée sur une face du substrat (Sb) et que sur la face opposée du substrat est implantée une résistance de chauffage (RC) en vis-à-vis de la cellule électrochimique (DE) et notamment en vis-à-vis de l'ouverture d'accès des gaz (G).

## Patentansprüche

1. Elektrochemischer Fühler mit integrierter Struktur, zur Messung der relativen Konzentration von reaktiven Stoffen, die in einer fuiden Mischung enthalten sind, dadurch gekennzeichnet, daß er umfaßt:

- ein Substrat (Sb) aus einem bei hoher Temperatur gut elektrisch isolierenden und chemisch inerten Material, welches eine längliche Form hat und in Längsrichtung angeordnet eine erste Detektorzone, eine zweite Trägerzone zur Befestigung des Fühlers und eine dritte Zone zum elektrischen Anschluß beinhaltet;
- eine oder mehrere elektrochemische Zellen (DE), von denen mindestens eine empfindlich für einen Überschuß von einem der reaktiven Stoffe in bezug auf eine bestimmte Stöchiometrie ist, wobei diese Zelle direkt in der ersten Zone des Substrats (Sb) angeordnet ist;
- Bereiche für elektrische Anschlüsse (P1, P2, P3, P4, P5), die in der dritten Zone zum elektrischen Anschluß gelegen sind;
- Leiterbahnen zum elektrischen Anschluß (C10, C20, C50, C30, C40), die auf dem Substrat angeordnet sind und die elektrochemische Zelle (DE) mit den in der dritten Zone zum elektrischen Anschluß gelegenen elektrischen Anschlußbereichen (P1, P2, P3, P4, P5) verbinden;
- eine einkapselnde Schicht (S1, S2) aus einem für die Gasmischung undurchlässigen Material, welche mindestens die erste und zweite Zone bedeckt und insbesondere die elektrochemischen Zellen und die Leiterbahnen einkapselt und mindestens eine Öffnung für den Zutritt der Gase (G) zu den elektrochemischen Zellen besitzt; und
- ein Befestigungsteil (MF), das in der zweiten Befestigungszone gelegen ist und den Durchtritt des Fluids von der ersten Zone zur dritten Zone unterbindet.

2. Fühler nach Anspruch 1, dadurch gekennzeichnet, daß das Substrat (Sb) aus Aluminiumoxid mit einem

$Al_2O_3$-Anteil von zwischen 99,2 und 99,9 besteht.

3. Fühler nach Anspruch 1, dadurch gekennzeichnet, daß die elektrochemische Zelle (DE) eine Schicht aus einem festen Elektrolyten (EL) trägt, die auf dem Substrat in Kontakt mit den elektrisch leitfähigen Elektroden (E1/P1 nd E2/P2) gebildet ist, wobei eine der Elektroden (E2/P2) in Kontakt mit der Gaszutrittsöffnung steht und die Diffusion der reaktiven Stoffe erlaubt.

4. Fühler nach Anspruch 1, dadurch gekennzeichnet, daß das Befestigungsteil (MF) auf dem Fühler dicht befestigt ist.

5. Fühler nach Anspruch 1, dadurch gekennzeichnet, daß das Befestigungsteil (MF) Mittel zur Montage (MFO) besitzt, die eine Befestigung des Fühlers in einer Gehäusewand (CA) in der Weise erlauben, daß die elektrochemische Zelle (DE) im Inneren des Gehäuses (CA) gelegen ist, welches die zu analysierende Gasmischung enthält, und daß die Gehäusewand, die mit dem Befestigungsteil (MF) verbunden ist, den Durchtritt der Gasmischung zur Anschlußzone unterbindet.

6. Fühler nach Anspruch 1, dadurch gekennzeichnet, daß er eine Kontakthülse (CE) aufweist, die auf der dritten Zone zum elektrischen Anschluß angebracht ist und Verbindungskontakte (B1, B2, B3, B4, B5) aufweist, die mit den Anschlußbereichen (P1, P2, ...) in Kontakt stehen.

7. Fühler nach Anspruch 1, dadurch gekennzeichnet, daß das Substrat (Sb) und das Befestigungsteil (MF) aus Materialien mit abgestimmter Wärmedehnung bestehen.

8. Fühler nach Anspruch 7, dadurch gekennzeichnet, daß das Substrat (Sb) und das Befestigungsteil (MF) aus Aluminiumoxid bestehen.

9. Fühler nach Anspruch 1, dadurch gekennzeichnet, daß der Steg, welcher die elektrochemische Zelle (DE) trägt, mit Hilfe eines Zementes in das Befestigungsteil (MF) eingegossen ist, dessen Material hinsichtlich der Wärmedehnung auf das Material des Substrats (Sb) und das Material des Befestigungsteils (MF) abgestimmt ist.

10. Fühler nach Anspruch 1, dadurch gekennzeichnet, daß er ein Bauteil (R) aufweist, in welchem das Befestigungsteil (MF) mit der elektrochemischen Zelle (DE) angebracht ist, welche in dem Bauteil eingebaut ist, welches außerdem einen mit Gewinde versehenen Teil besitzt, der eine Befestigung in dem Gehäuse (CA) und von Kühlrippen erlaubt.

11. Verfahren zur Herstellung eines Fühlers mit einer elektrochemische Detektorzelle (DE), die einen Elektrolyten (EL), der auf einem Substrat (Sb) gebildet ist, und Elektroden (E1/P1 und E2/P2) aufweist, wovon jede einen Teil des Elektrolyten bedeckt, und die eine einkapselnde Schicht (S1) aufweist, welche die Elektroden und den Elektrolyten mit Ausnahme einer Gaseintrittsöffnung (G) bedeckt und den Durchtritt von Gasen zu dem Elektrolyten (EL) gestattet, dadurch gekennzeichnet, daß es die folgenden Stufen umfaßt:

– der Elektrolyt (EL) der Zelle wird auf der Substratscheibe an einem Ende der Scheibe abgeschieden;
– das Gebilde wird zusammengesintert;
– die Elektroden (E1/P1 und E2/P2) werden abgeschieden;
– das Gebilde wird geglüht;
– die Anschlußbereiche auf dem anderen Ende der Substratscheibe und die elektrischen Leiter, welche die Anschlußbereiche mit den Elektroden verbinden, werden ausgebildet;
– eine Emailschicht, welche die elektrochemische Detektorzelle (DE) und die Leiter bedeckt und eine Gaseintrittsöffnung (G) vorsieht, wird abgeschieden; und
– das Gebilde wird geglüht.

12. Verfahren zur Herstellung eines Fühlers mit einer elektrochemischen Detektorzelle (DE), die einen Elektrolyten (EL), der auf einem Substrat (Sb) gebildet ist, und Elektroden (E1/P1 und E2/P2) aufweist, wovon jede einen Teil des Elektrolyten bedeckt, und die eine einkapselnde Schicht (S1) aufweist, welche die Elektroden und den Elektrolyten mit Ausnahme einer Gaseintrittsöffnung (G) bedeckt und den Durchtritt von Gasen zu dem Elektrolyten (EL) gestattet, dadurch gekennzeichnet, daß es die folgenden Stufen umfaßt:

– der Elektrolyt (EL) der Zelle wird auf einer Substratscheibe an einem Ende der Scheibe abgeschieden;
– die Elektroden (E1/P1 und E2/P2) werden abgeschieden;
– das Gebilde wird zusammengesintert;
– an einem anderen Ende der Substratscheibe werden die Anschlußbereiche und die elektrischen Leiter ausgebildet, welche die Anschlußbereiche mit den Elektroden verbinden;
– eine Emailschicht, welche die elektrochemische Detektorzelle (DE) und die Leiter bedeckt und eine Gaseintrittsöffnung (G) vorsieht, wird abgeschieden;
– das Gebilde wird geglüht.

13. Verfahren zur Herstellung eines Fühlers nach einem der Ansprüche 11 oder 12, dadurch gekennzeichnet, daß mehrere Fühler gemeinsam auf derselben Substratplatte ausgebildet werden, die dann abgeschnitten werden, um einzelne Fühler zu erhalten.

14. Verfahren nach einem der Ansprüche 11 oder 12, dadurch gekennzeichnet, daß das Substrat aus einem

bei hoher Temperatur gut elektrisch isolierenden und chemisch inerten Material besteht.

15. Verfahren nach Anspruch 14, dadurch gekennzeichnet, daß das Substrat aus Aluminiumoxid besteht, welches einen Gehalt an $Al_2O_3$ zwischen 99,2 und 99,9% aufweist.

16. Elektrochemischer Fühler nach Anspruch 1, dadurch gekennzeichnet, daß die elektrochemische Zelle (DE) als Ganzes mit den Leiterbahnen zum elektrischen Anschluß (C10, C20) und den Anschlußbereichen (P1, P2) auf der gleichen Seite des Substrats (Sb) eingefügt ist.

17. Elektrochemischer Fühler nach Anspruch 16, dadurch gekennzeichnet, daß die elektrochemische Zelle (DE), die empfindlich für einen Überschuß von einem der reaktiven Stoffe ist, auf einer Seite des Substrats (Sb) eingefügt ist, und daß auf der gegenüberliegenden Seite des Substrats eine Widerstandsheizung (RC) angebracht ist, die gegenüber der elektrochemischen Zelle (DE) und insbesondere gegenüber der Gaseintrittsöffnung (G) liegt.

## Claims

1. An electrochemical sensor with an integrated structure, for the measurement of relative concentrations in reactive materials contained in a fluid mixture, characterized in that it comprises:

– a substrate (Sb) made of a material which is a good electrical insulator at a high temperature and is chemically inert, in an elongated form, comprising, arranged in the length direction thereof, a first detection zone, a second zone for supporting and mounting the sensor, a third electrical connection zone;

– one or more electrochemical cells (DE) of which at least one is sensitive to an excess of one of the reactive materials with respect to a given stoichiometry, said cell being implanted directly in the first zone of the substrate (Sb):

– electrical connection areas (P1, P2, P3, P4 and P5) arranged in the third electrical connection zone;

– conductive electrical connection tracks (C10, C20, C50, C30 and C40) arranged on the substrate and connecting the electrochemical cell or cells (DE), respectively, with the electrical connection areas (P1, P2, P3, P4 and P5) arranged in the third electrical connection zone;

– an encapsulating layer (S1, S2) of a material impervious to the said gas mixture and covering at least the first and the second zones, said layer more particularly encapsulating the electrochemical cells and the connection tracks and possessing at least one opening for the access of gases (G) into the electrochemical cells; and

– a mounting member (MF) arranged in the second mounting zone and preventing the passage of the fluid from the first zone into the third zone.

2. The sensor as claimed in claim 1, characterized in that the substrate (Sb) is manufactured of alumina possessing an $Al_2O_3$ level comprised between 99.2 and 99.9.

3. The sensor as claimed in claim 1, characterized in that the electrochemical cell (DE) comprises a layer of solid electrolyte (EL) produced on the substrate (Sb) and being in contact with electrically conductive electrodes (E1/P1 and E2/P2), one of the said electrodes (E2/P2) being in contact with the gas access opening and allowing diffusion of the reactive material.

4. The sensor as claimed in claim 1, characterized in that the mounting member (MF) is mounted in a sealing manner on the sensor.

5. The sensor as claimed in claim 1, characterized in that the mounting member (MF) possesses mounting means (MFO) allowing mounting of the sensor in a wall of a casing (CA) in such a manner that the electrochemical cell (DE) be arranged inside the casing (CA) containing the gaseous mixture to be analyzed and in that the wall of the casing associated with the mounting member (MF) prevent the passage of the gaseous mixture into the connection zone.

6. The sensor as claimed in claim 1, characterized in that it comprises a female contact socket of a (CE) mounted on the third electrical connection zone and possessing connection yokes (B1, B2, B3, B4 and B5) placed in contact with the said connection areas (P1, P2,...).

7. The sensor as claimed in claim 1, characterized in that the substrate (Sb) and the mounting member (MF) are manufactured of a material matched as regards dilatation.

8. The sensor as claimed in claim 7, characterized in that the substrate (Sb) and the mounting member (MF) are manufactured of alumina.

9. The sensor as claimed in claim 1, characterized in that the bar bearing the electrochemical cell (DE) is sealed in the mounting member (MF) by means of a cement whose material is matched as regards dilatation with the material of the substrate (Sb) and with the material of the mounting member (MF).

10. The sensor as claimed in claim 1, characterized in that it comprises a mounting element (R) in which there is mounted the mounting member (MF) with the electrochemical cell (DE) received in the mounting element, the latter having furthermore a threaded part allowing the mounting in a casing (CA) and the mounting of cooling fins.

11. A method of producing a sensor comprising an electrochemical detection cell (DE) including an electrolyte (EL) produced on a substrate (Sb) and electrodes (E1/P1 and E2/P2) each covering a part of the electrolyte, an encapsulating layer (S1) covering the electrodes and the electrolyte but for a gas inlet opening (G) allowing the passage of the gases to the electrolyte (EL), characterized in that it comprises the following stages:

- the deposition of the electrolyte (EL) of the cell on the wafer of substrate at one end of the wafer;
- the co-sintering of the assembly;
- the deposition of the electrodes (E1/P1 and E2/P2);
- the baking of the assembly;
- the production of connection areas at another end of the wafer of the substrate and of the electrical conductors connecting such connection areas with the electrodes;
- the deposition of a layer of enamel covering the electrochemical detection cell (DE) and the conductors, and providing the gas inlet opening (G); and
- the baking of the assembly.

12. A method of producing a sensor comprising an electrochemical detection cell (DE) including an electrolyte (EL) produced on a substrate (Sb) and electrodes (E1/P1 and E2/P2) each covering a part of the electrolyte, an encapsulating layer (S1) covering the electrodes and the electrolyte but for a gas inlet opening (G) allowing the passage of the gases into the electrolyte (EL), characterized in that it comprises the following stages:

- the deposition of the electrolyte (EL) of the cell on the wafer of substrate at one end of the wafer;
- the deposition of the electrodes (E1/P1 and E2/P2);
- the co-sintering the assembly;
- the production of connection areas at another end of the wafer of the substrate and of the electrical conductors connecting such connection areas with the electrodes;
- the deposition of a layer of enamel covering the electrochemical detection cell (DE) and the conductors, and providing the gas inlet opening (G); and
- the baking of the assembly.

13. The method as claimed in claim 11 or claim 12, characterized in that a plurality of sensors are jointly produced on the same wafer of substrate and then cut apart in order to obtain separate sensors.

14. The method as claimed in claim 11 or claim 12, characterized in that the substrate is a material with good electrical insulating properties at a high temperature and is chemically inert.

15. The method as claimed in claim 14, characterized in that the substrate is manufactured of alumina possessing an $Al_2O_3$ level comprised between 99.2 and 99.9%.

16. The sensor as claimed in claim 1, characterized in that the said electrochemical cell (DE) is implanted bodily on the same surface of the substrate (Sb) with conductive electrical connection tracks (C10 and C20) and connection areas (P1 and P2).

17. The sensor as claimed in claim 16, characterized in that the said electrochemical cell (DE), which is sensitive to an excess of one of the reactive materials, is implanted on the one surface of the substrate (Sb) and in that the opposite surface of the substrate has implanted on it a heating resistor (RC) opposite to the electrochemical cell (DE) and more particularly opposite to the gas access opening (G).

FIG.1

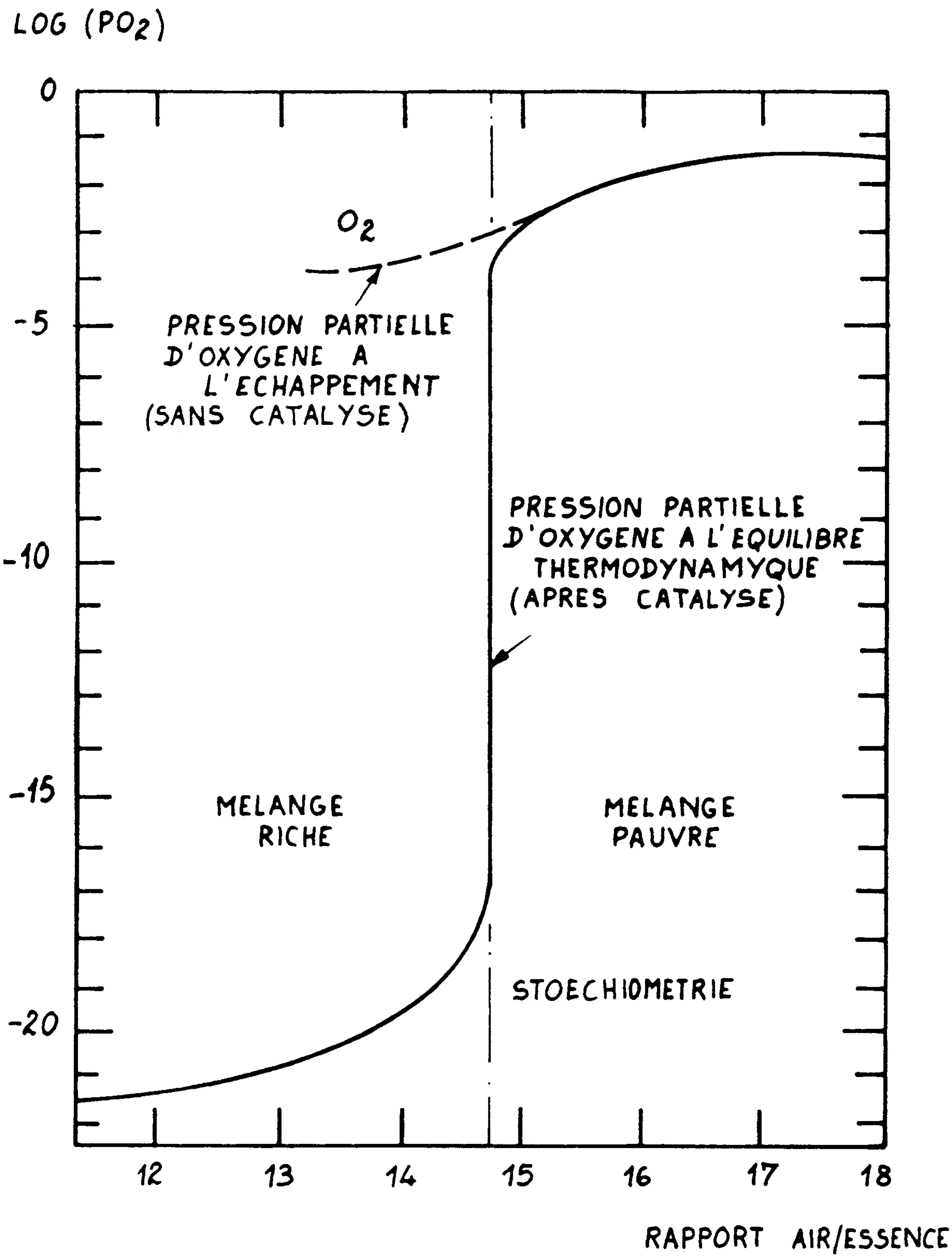
LOG (PO2)
0
-5
-10
-15
-20
O2
PRESSION PARTIELLE
D'OXYGENE A
L'ECHAPPEMENT
(SANS CATALYSE)
PRESSION PARTIELLE
D'OXYGENE A L'EQUILIBRE
THERMODYNAMYQUE
(APRES CATALYSE)
MELANGE
RICHE
MELANGE
PAUVRE
STOECHIOMETRIE
12
13
14
15
16
17
18
RAPPORT AIR/ESSENCE

FIG.2

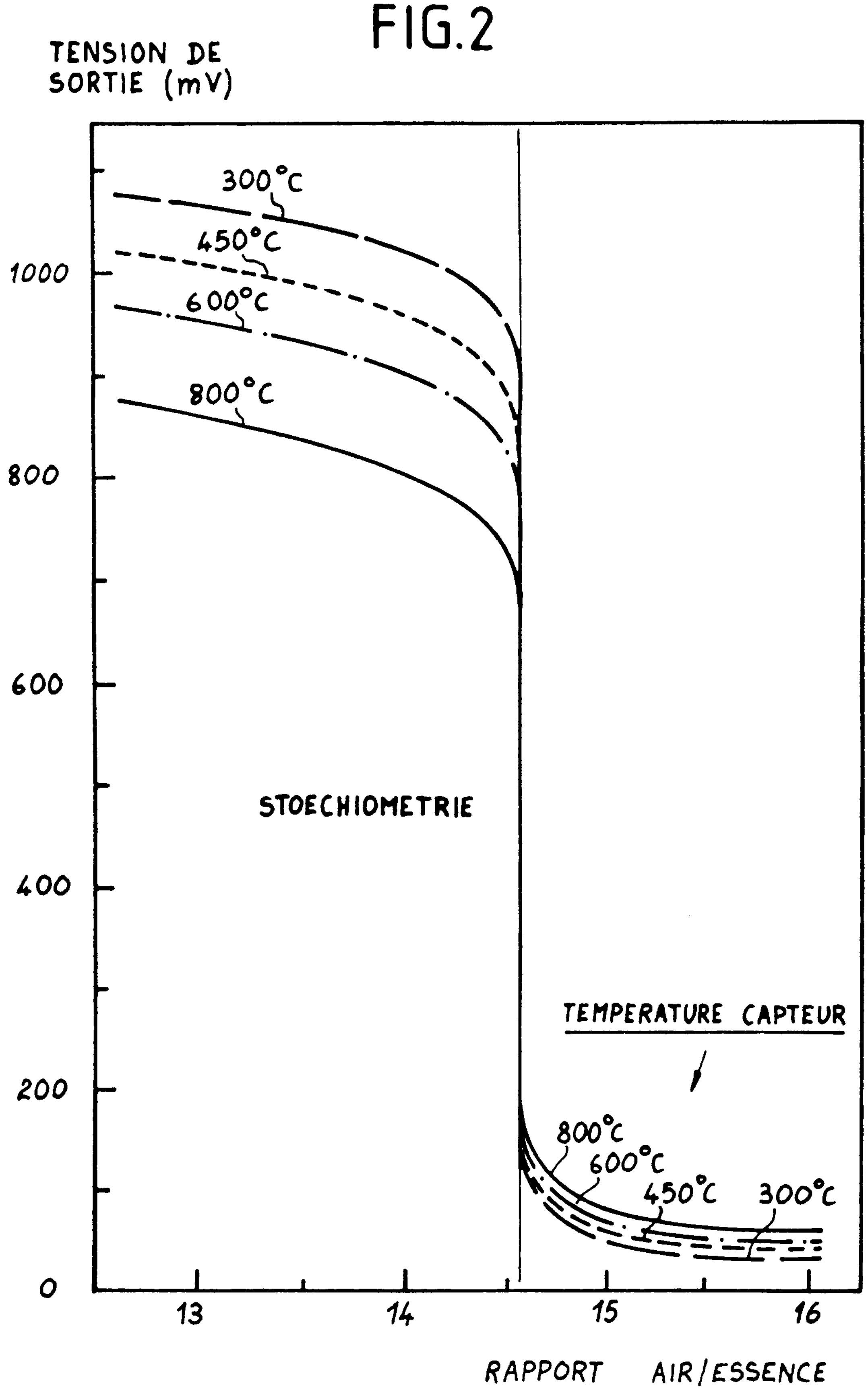
TENSION DE
SORTIE (mV)
300°C
450°C
1000
600°C
800°C
800
600
STOECHIOMETRIE
400
TEMPERATURE CAPTEUR
200
800°C
600°C
450°C
300°C
0
13
14
15
16
RAPPORT AIR/ESSENCE

FIG.3

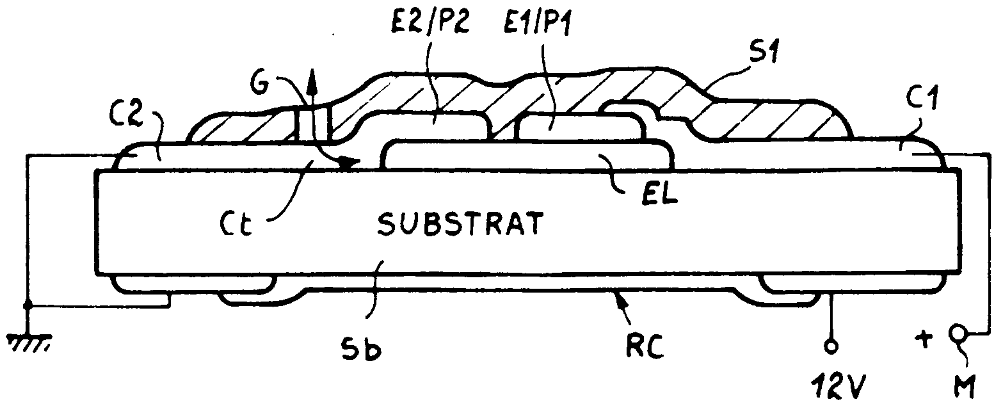


FIG.4

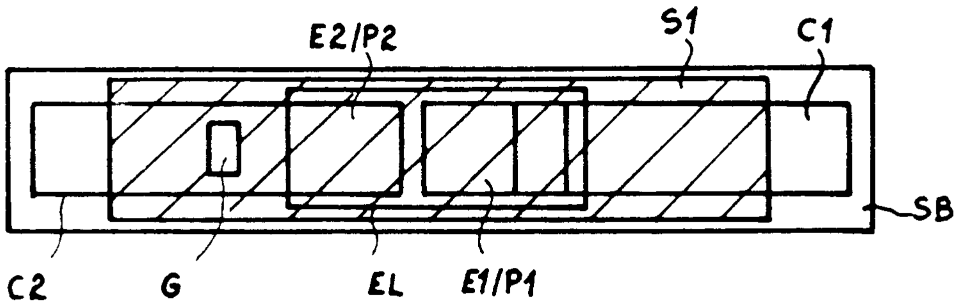


FIG.5

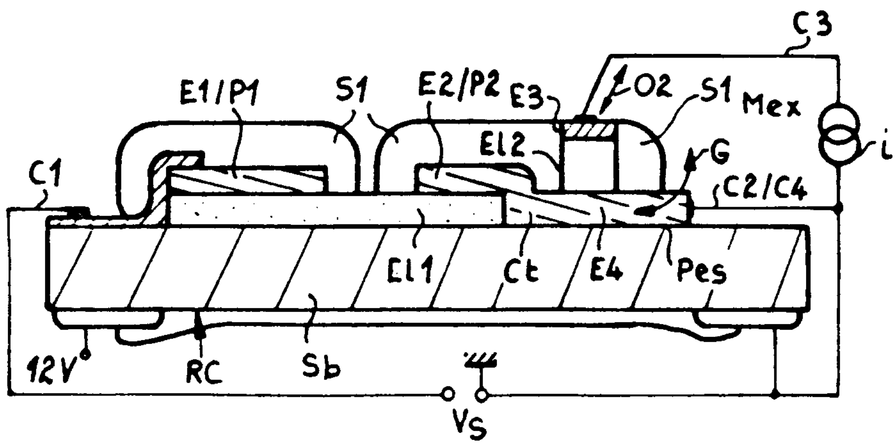

FIG.6

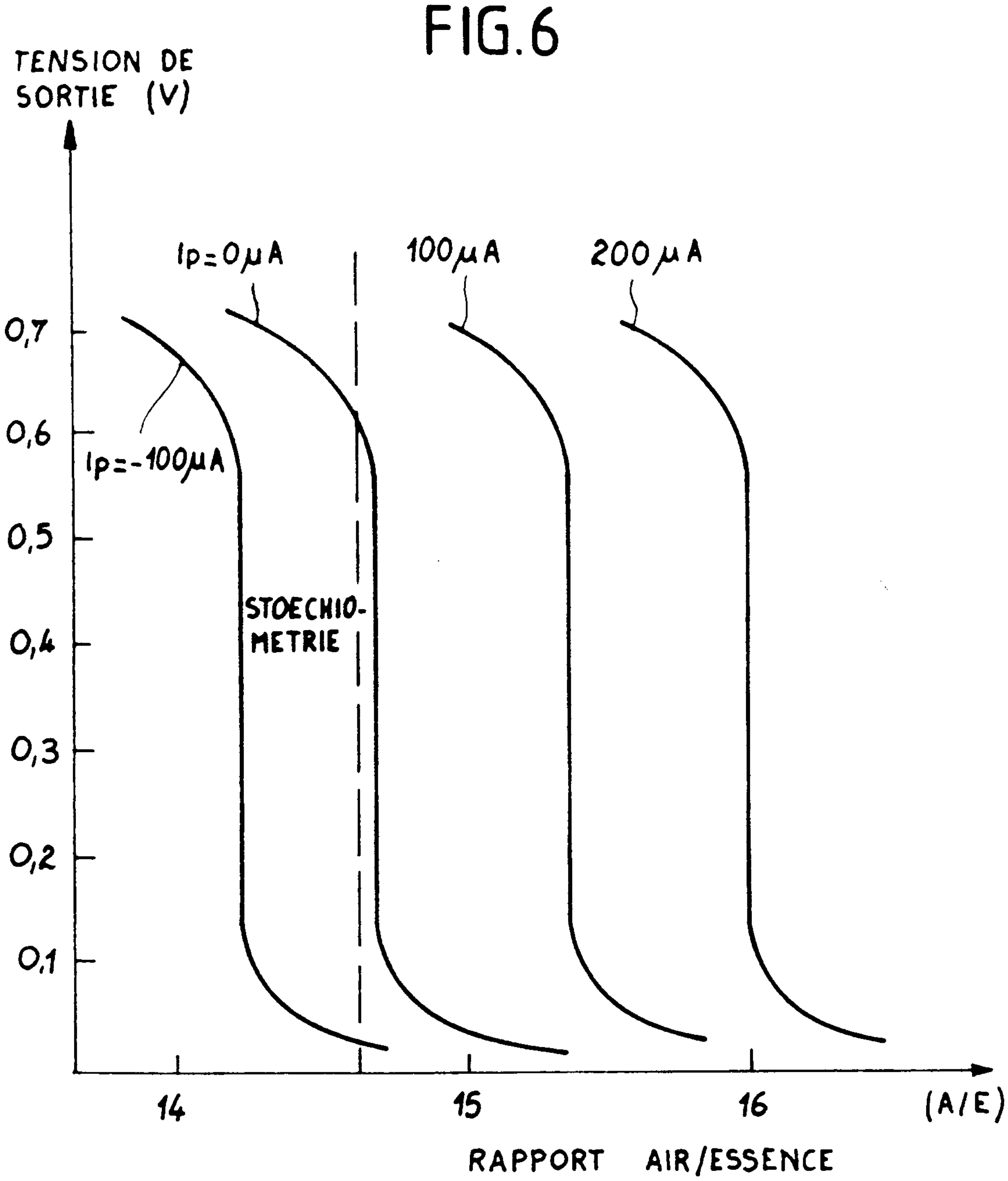
TENSION DE SORTIE (V)
0,7
0,6
0,5
0,4
0,3
0,2
0,1
Ip=0µA
100µA
200µA
Ip=-100µA
STOECHIO-METRIE
14
15
16
(A/E)
RAPPORT AIR/ESSENCE

FIG.7

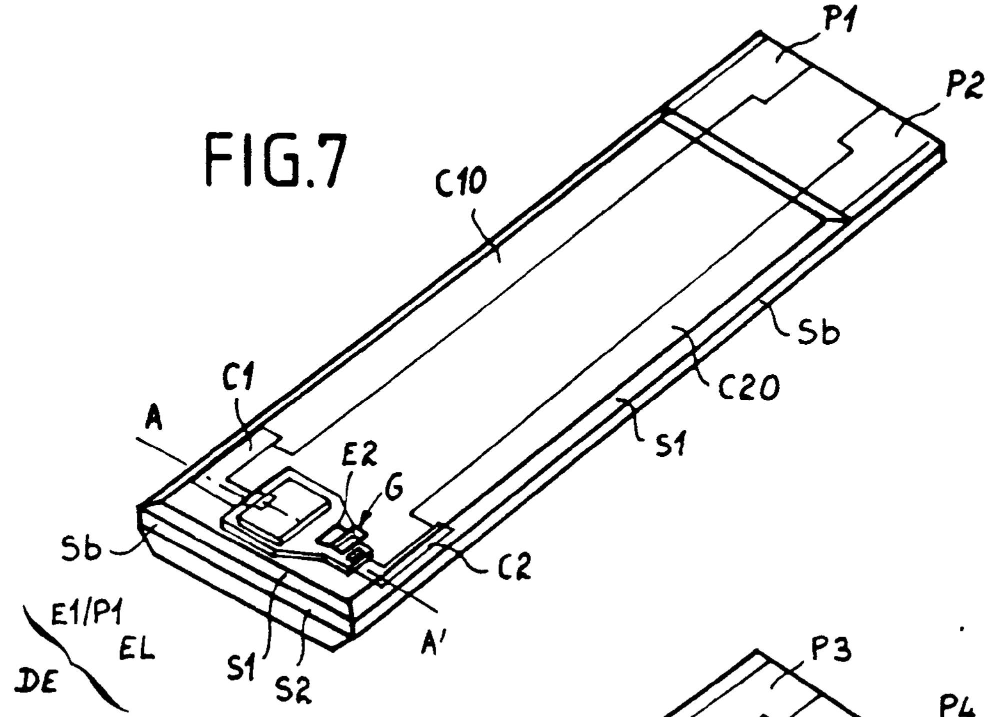


FIG.8

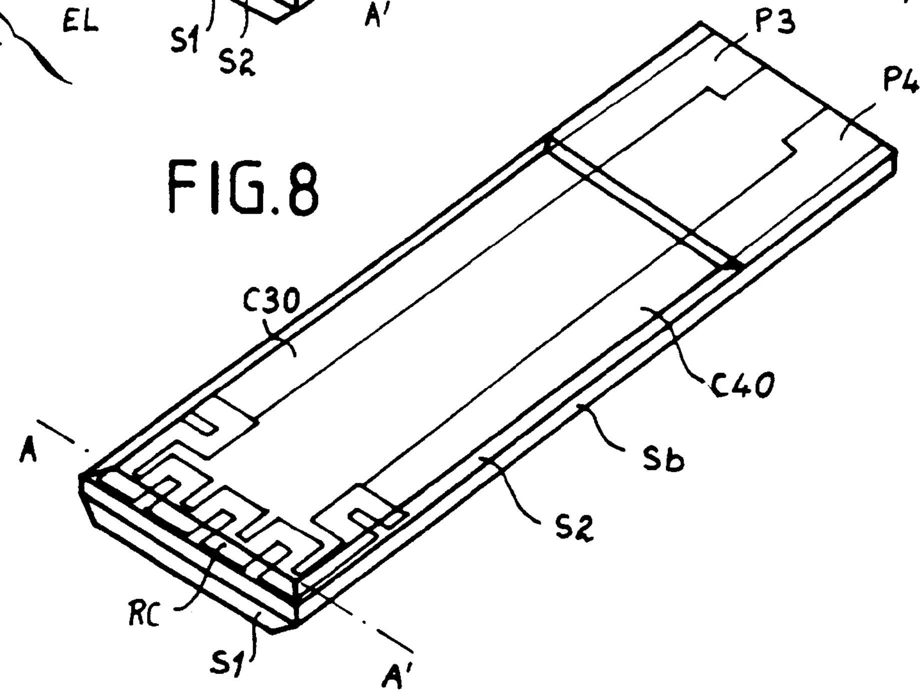


FIG.9

Coupe AA'

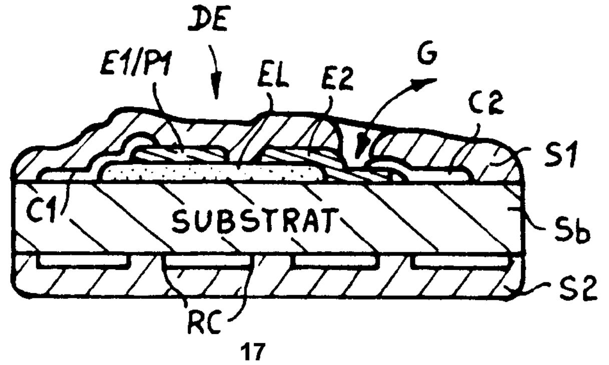

FIG.10

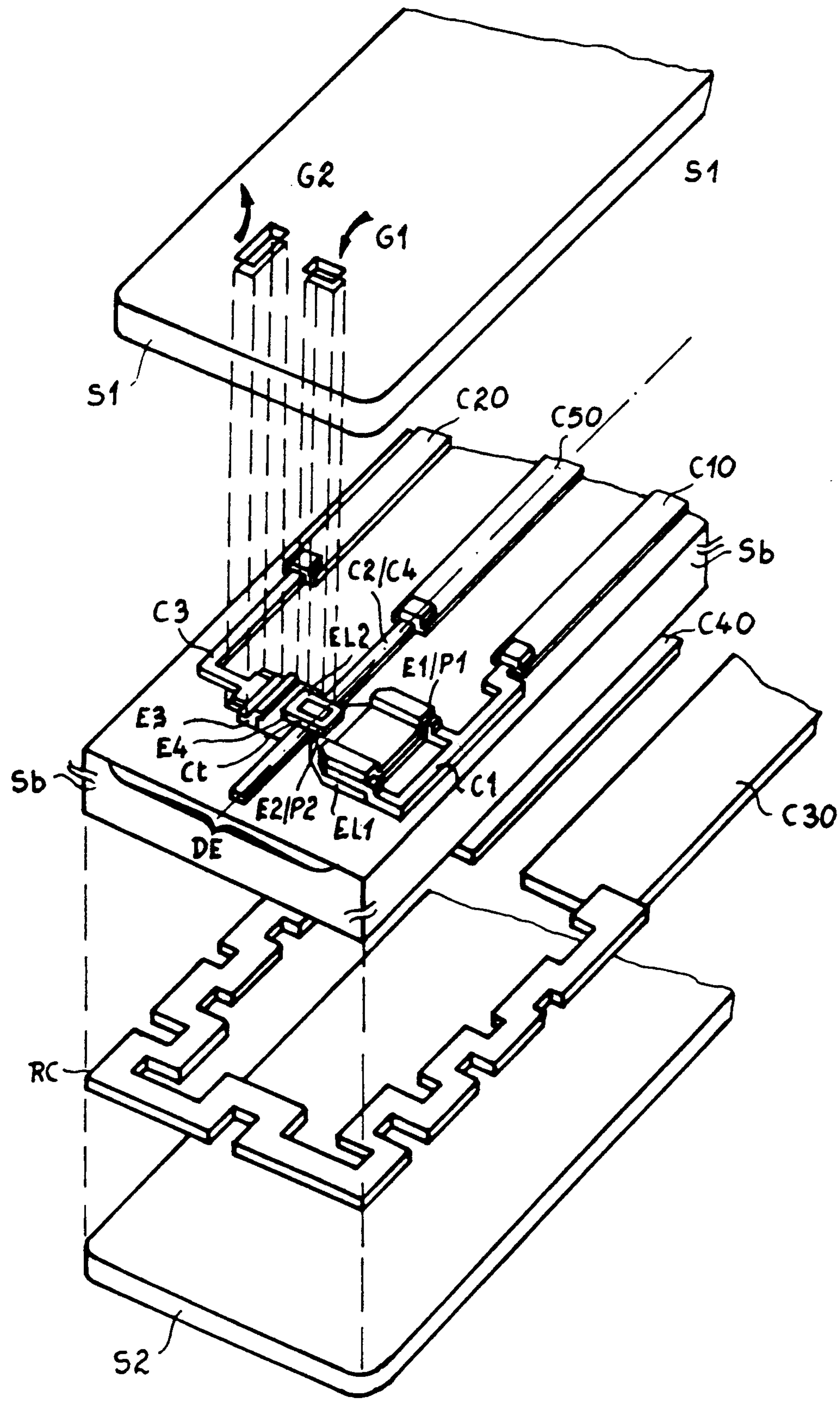
G2
G1
S1
S1
C20
C50
C10
Sb
C2/C4
C3
EL2
C40
E1/P1
E3
E4
Ct
Sb
E2/P2
EL1
C1
C30
DE
RC
S2

FIG.11

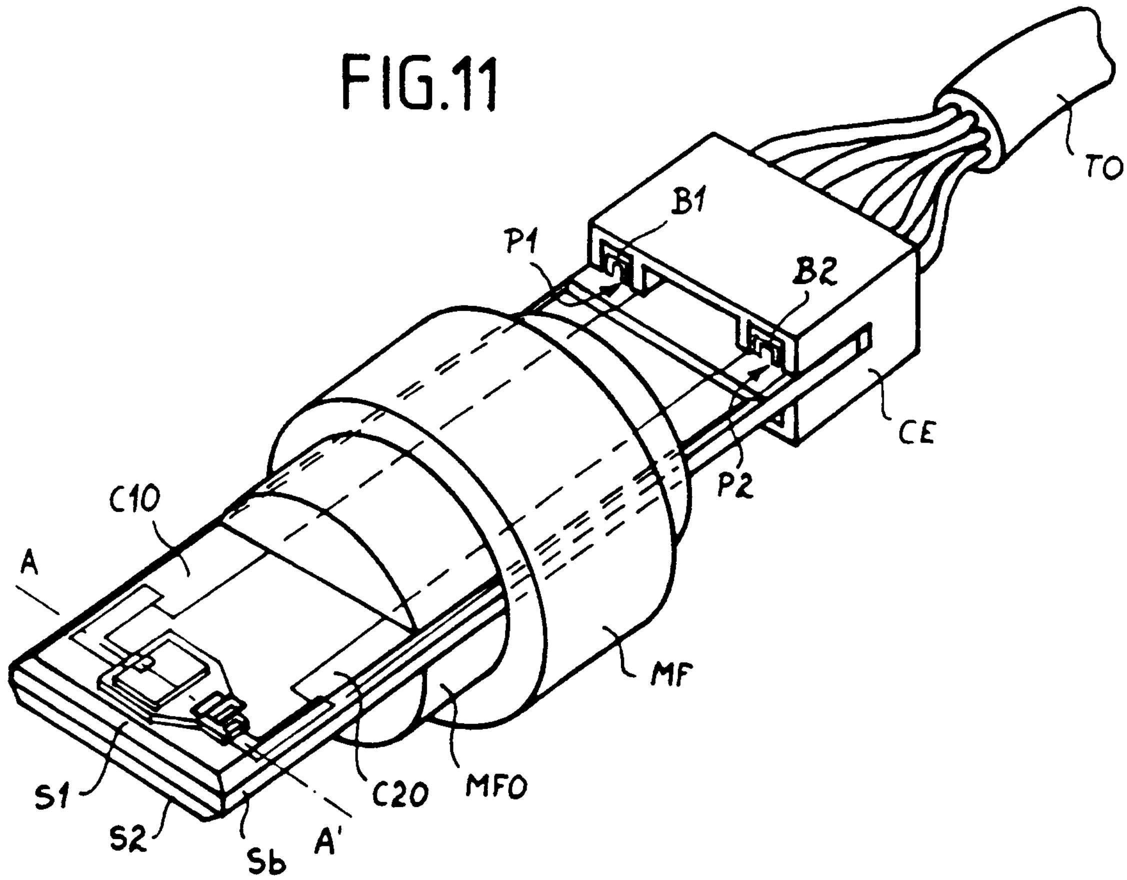
TO
B1
P1
B2
CE
P2
C10
A
MF
S1
S2
Sb
A'
C20
MFO

FIG.12

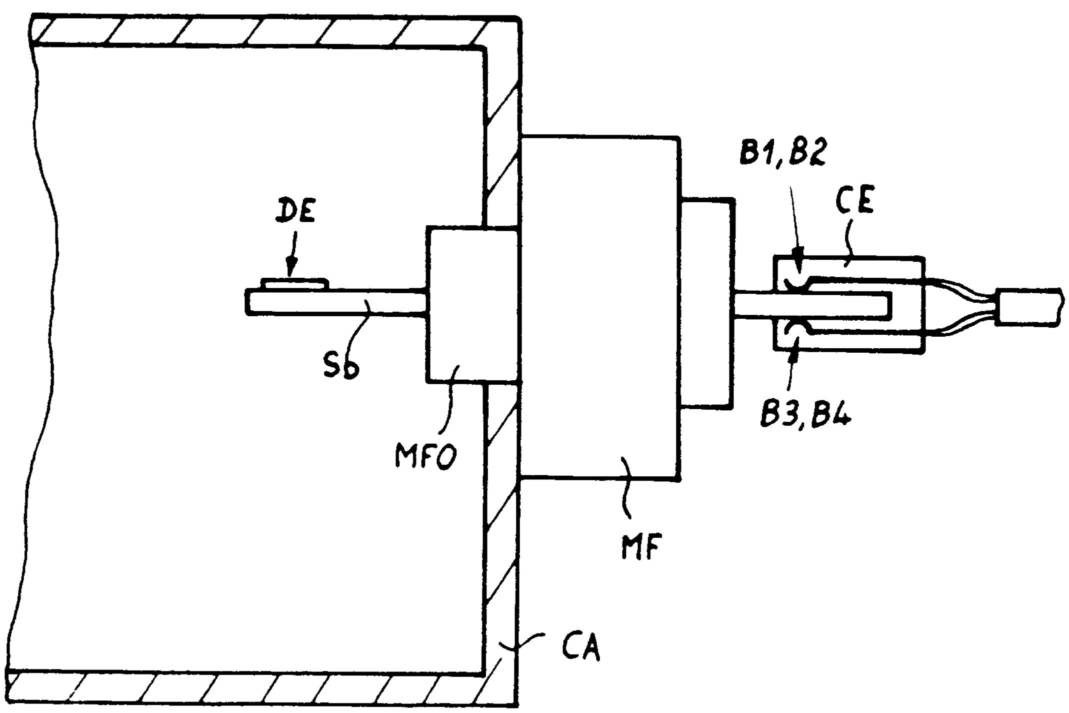
B1,B2
CE
DE
Sb
B3,B4
MFO
MF
CA

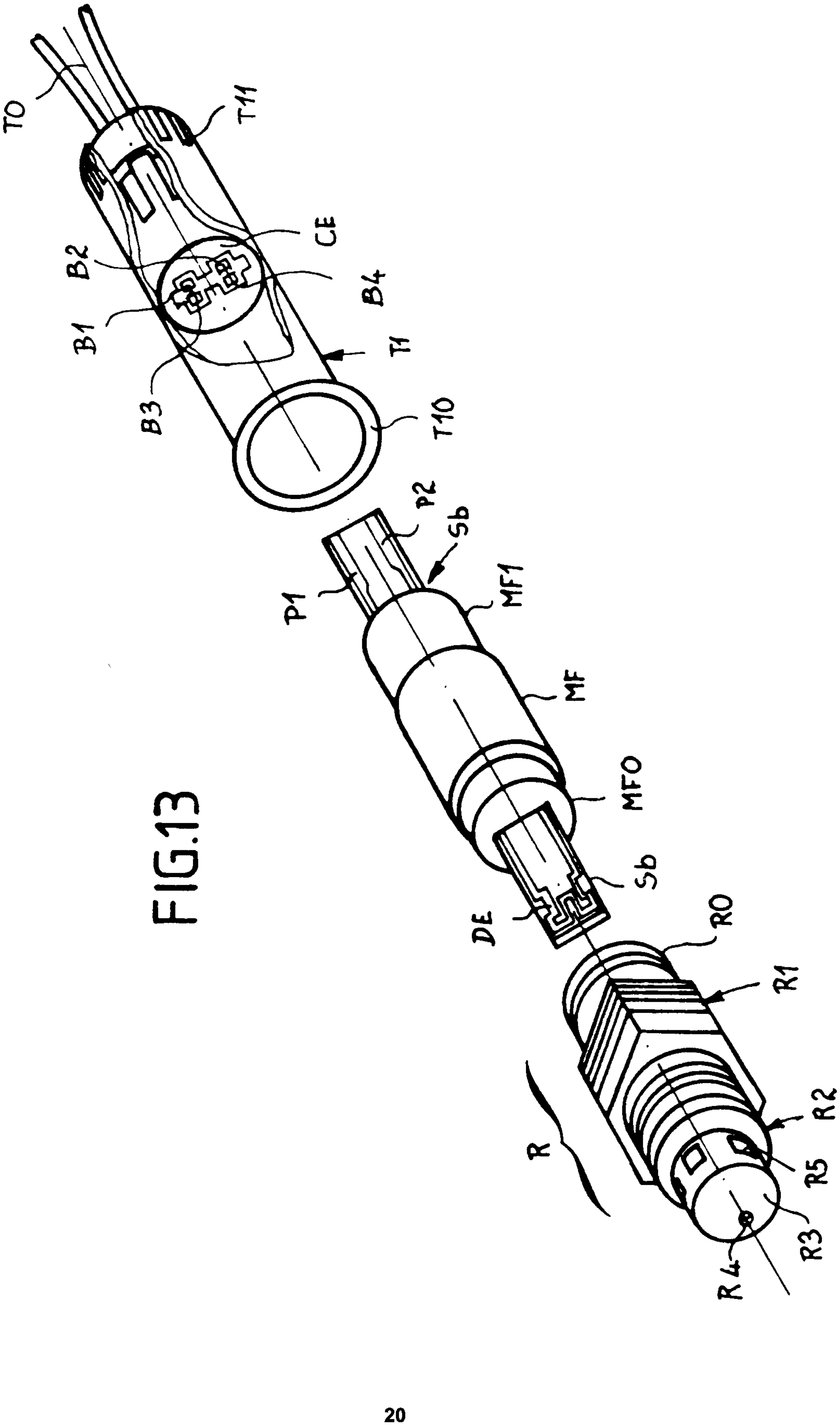
TO
T11
CE
B2
B4
B1
T1
B3
T10
P2
Sb
P1
MF1
MF
MFO
Sb
DE
RO
R1
R2
R
R5
R3
R4

FIG.13

FIG.14

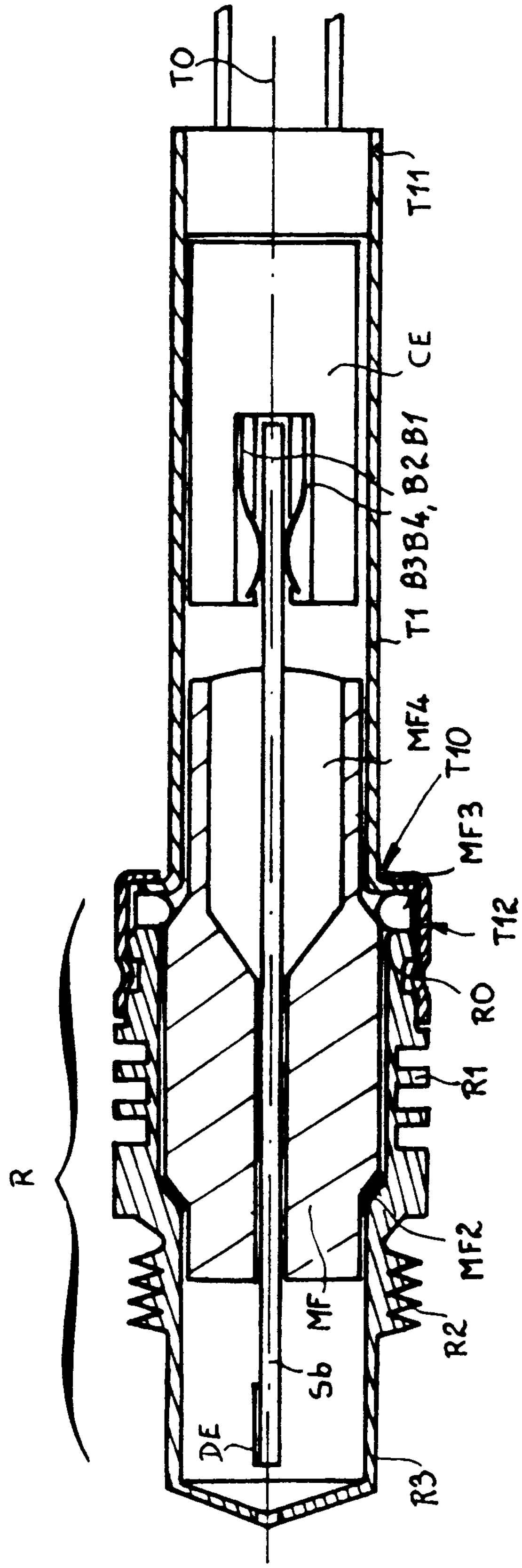

FIG.15

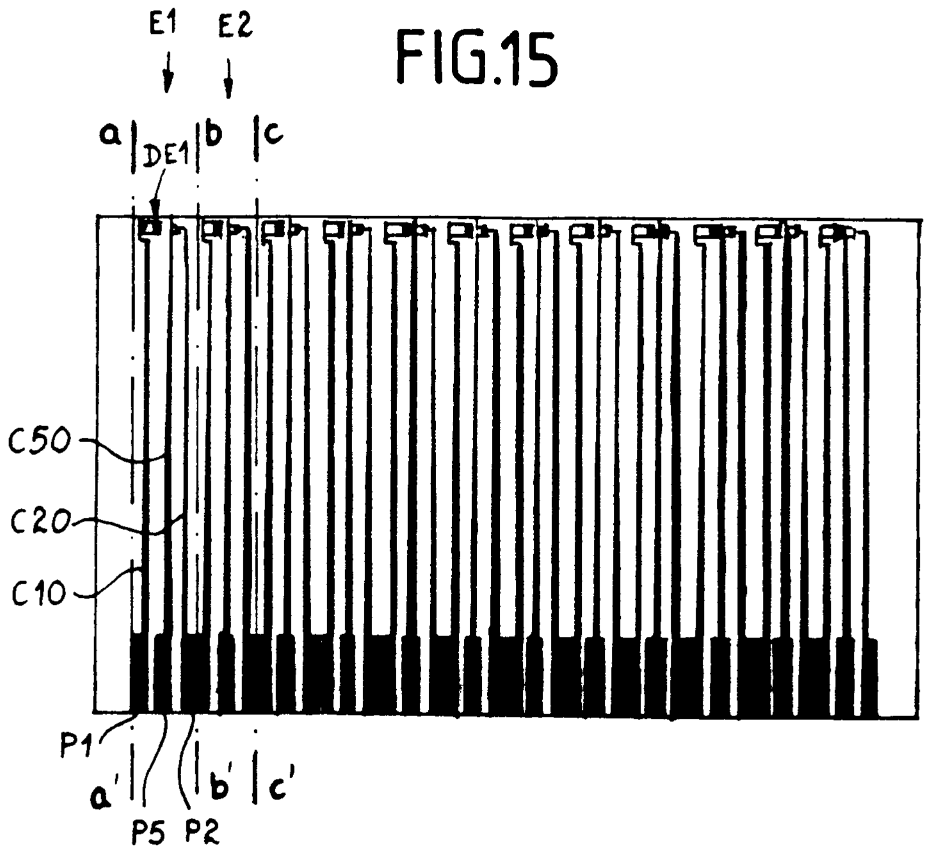
E1
E2
a
b
c
DE1
C50
C20
C10
P1
a'
b'
c'
P5
P2

FIG.16

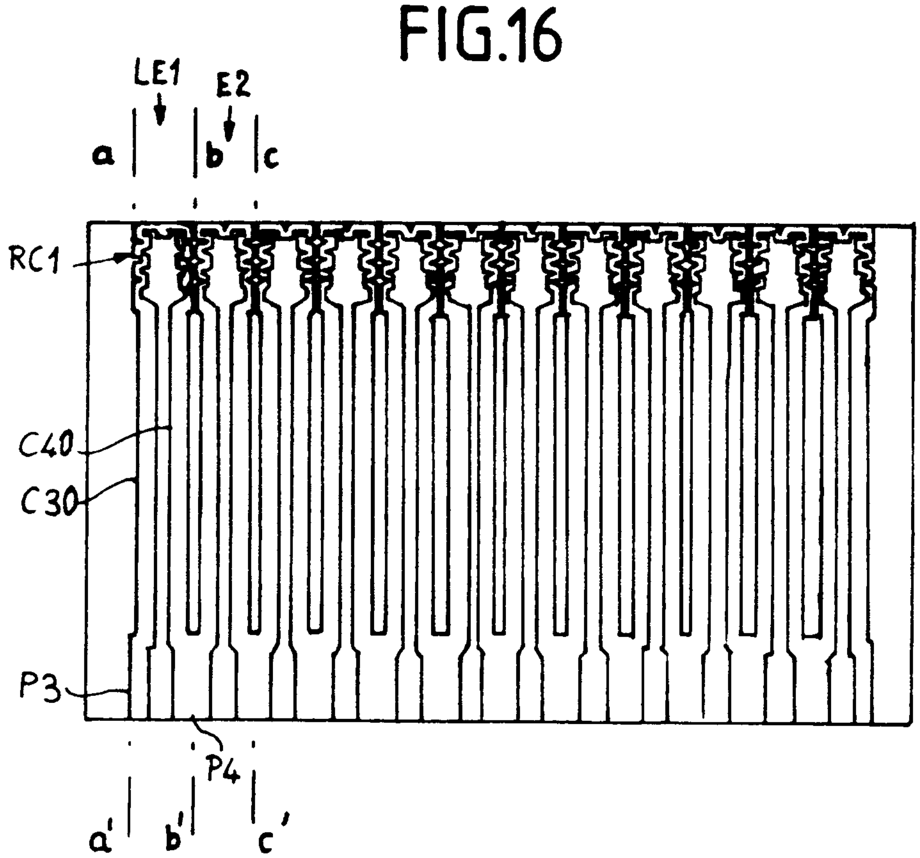
LE1
E2
a
b
c
RC1
C40
C30
P3
P4
a'
b'
c'